# EUROPEAN PATENT SPECIFICATION

(11) **EP 2 468 637 B1**
(45) Date of publication and mention of the grant of the patent: **29.05.2013**
(21) Application number: 11195263.6
(22) Date of filing: 22.12.2011
(51) Int. Cl.: B65B 25/04, B65G 51/01

(54) **Apparatus for filling bins with products**
Vorrichtung zum Befüllen von Behältern mit Produkten
Appareil pour remplir des corbeilles avec des produits

(30) Priority: 23.12.2010 EP 10015992
(43) Date of publication of application: 27.06.2012
(73) Proprietor: Aweta G&P B.V., 2631 HG Nootdorp (NL)
(72) Inventor: Mancini, Maurizio, 47023 Pievesestina di Cesena (IT)
(74) Representative: Jansen, Cornelis Marinus

(56) References cited:
- US-A- 4 807 422
- US-A1- 2005 210 831

## Description

The present invention concerns an apparatus for filling bins with products, for example fruit, the apparatus comprising:
- a channel for feeding a liquid stream with products into a flowing direction to a filling head;
   wherein said filling head is connected to the downstream end of said channel;
   said filling head being a part of a bin tank tower configured for mainly downwardly and upwardly moving said bins, and for positioning such bins for filling underneath said head in subsequent cycles;
   wherein said filling head has a bottom plate with a mainly circular aperture for guiding the stream of products from said channel, through said aperture, into a bin underneath during operation, and
   wherein said filling head has an arcuate end wall for guiding the stream of products into said aperture;
- the bin tank tower comprising a lift for at least taking and moving a said bin,
- a first control unit for controlling flow speed to said filling head and through said aperture; and
- a second control unit for controlling taking and moving such bin thereby moving such bin to a filling position before filling, and from the filling position after having been filled up.

Such an apparatus is known from US4807422. More in particular in said document there is explained how to fill boxes, crates, or bins, with products, for example fruit, such as there are apples. The products are supplied, transported and conveyed in channels by means of liquid streams to a filling head positioned at the downstream end of such channel. The liquid, which is water as mentioned in this document, is urged by a pump system through a liquid circuit.

The filling head is part of a bin tank tower. Said bin tank tower comprises a lift for lowering empty bins into a tank filled with liquid. During filling such bin remains in the tank, and after filling such bin is lifted from the tank to a position suitable for further processing. In this design the filling head is positioned adjacent and above such bin, and head and bin are lifted together.

More in particular the filling head comprises a bottom plate with a circular aperture and a double arcuate end wall. By such design a liquid stream downstream from the head through the aperture into such bin is obtained and reliable filling of such bin results.

As a further characteristic such end walls are equipped with a flexible material to avoid any damage to the fruits when said fruits, while being transported by the current of water, impinge on the guides.

Experiences with this stream and bin processing over many years have shown that often the stream is interrupted whereas accumulation of bulk products close to and even on the aperture occurs. Apparently the double arcuate end wall avoids damage of products but continuous flow can not be maintained.

In order to remedy such shortcomings the apparatus in accordance with the invention is characterized by the features of claim 1.

Particularly, the apparatus comprises at least one additional liquid guide having an outlet in said arcuate end wall for creating a liquid flow mainly in a direction reverse to said flowing direction.

Having the measure as mentioned above it has appeared that such additional liquid flow stabilizes the vortices also originating by said prior art double arcuate end wall design. Consequently continuous filling and therefore more reliable processing of such stream is obtained.

With great advantage a regular flow down through the aperture results, furthermore requiring less liquid pumping power and giving suitable supply leveling in the bin.

By having a stabilized flow as a further advantage such continuous filling has appeared to give a continuous filling height over the whole filling cross section. No unpredictable troughs in center or corners of the bin occur, thereby giving an accordingly higher and more reliable filling total.

Another additional advantage of such stabilized flow is recognized in having a reduced pump drive power, i.e. a reduced pump rotation per second. Thus in a suitable way reduced power consumption results.

In a further embodiment of the present invention the apparatus is characterized in that the arcuate end wall comprises a smooth projection mainly extending into said outlet direction reverse to said flowing direction.

Also, according to a further embodiment, at least said projection can be made of flexible material.

Further advantageous embodiments are described in the dependent claims.

Further details and explanation are presented hereinafter, thereby referring to FIGURES 1 to 4.
In FIGURE 1 only schematically a plan view of a prior art filling head is shown;
in FIGURE 2 only schematically a plan view of a first embodiment of a filling head of the present invention is shown;
in FIGURE 3 only schematically a plan view of a second embodiment of a filling head of the present invention is shown; and
in FIGURE 4 an isometric view on a filling head of the present invention is shown.

In these FIGURES the same numbers represent the same parts or indications.

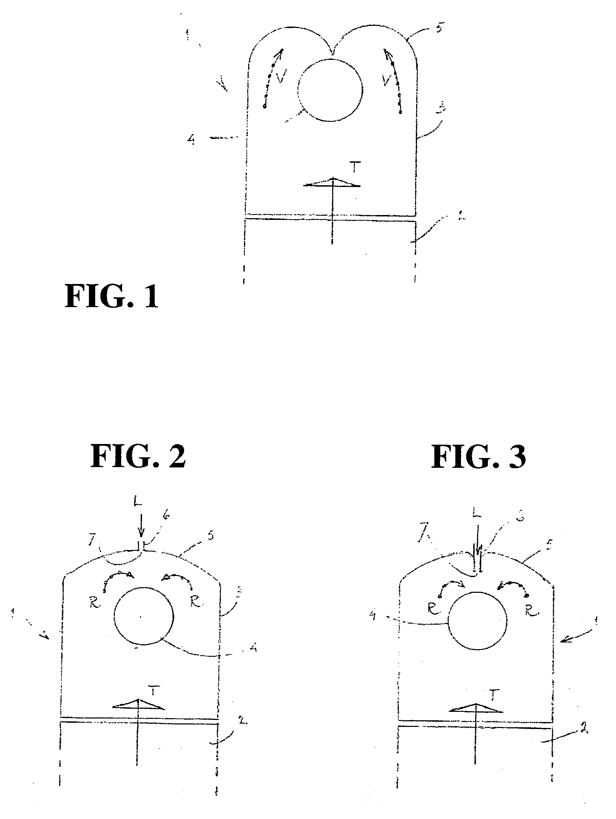

In FIGURE 1 a very schematic plan view of a prior art filling head 1 is shown. In a flowing direction T through a channel 2 a liquid stream with products, for example floating products, such as for example apples in a stream of water, is supplied to said filling head 1. The present plan view shows a bottom plate 3 with a circular aperture 4 through which the products are guided downwardly into such bin which during filling is positioned underneath said bottom plate 3. As shown in this FIGURE 1 said filling head 1 has an arcuate end wall 5, more in particular comprising a double arc. Such double arc is giving flow patterns which can be represented as vortices V. Such vortices V are considered to guide the products in such stream more suitably into said aperture 4.

As touched above, this suitable guidance is not always the case and has appeared to depend on flowing speed and concentration of products. Especially at high processing rates such vortices V can not avoid accumulation in the double arc assembly.

In FIGURES 2 and 3 two embodiments of the present invention are shown. In both embodiments an additional liquid flow L is provided, i.e. being additional to a main liquid stream that is supplied, in flow direction T, through the channel 2 during operation. In the exemplary embodiment, the additional liquid flow L is provided, so to say from behind, more in particular in a direction substantially reverse to the supply flowing direction T.

As shown in the FIGURES 2, 3 an additional liquid guide 6 with an outlet 7 in said arcuate end wall 5 is arranged giving such flow L. Because of such flow L vortices R are resulting wherein said vortices R are much more curved than those of the prior art devices. Thus a very regular supply to and transit through the aperture 4 is obtained.

More in particular in FIGURE 3 the guide 6 with outlet 7 is designed as a smooth projection, making part of the arcuate end wall 5. Such design further improves careful processing of the products, such as fruit, more in particular such as apples or pears.

As follows from the drawings, particularly, the liquid guide 6 may be configured to direct the respective liquid flow L towards the mainly circular aperture 4.Also, according to an embodiment, the outlet 7 of the liquid guide 6 may be located opposite a centre of the mainly circular aperture 4, when viewed in a plan view. Further, in an embodiment, the outlet 7 of the liquid guide 6 may be located centrally with respect to the product feeding channel 2, when viewed in a plan view.

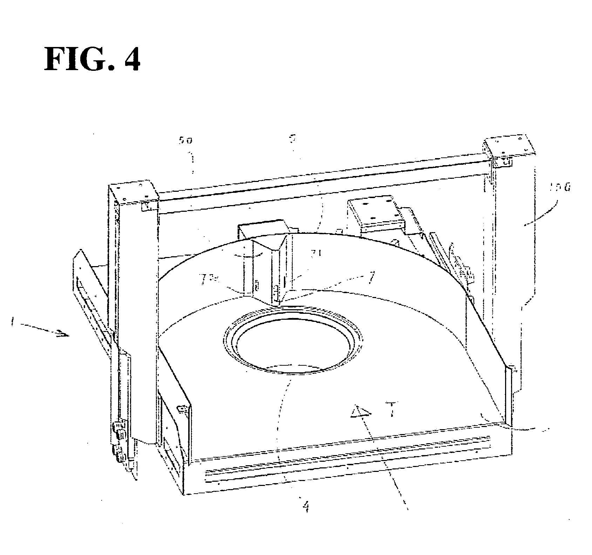

In FIGURE 4 an isometric view of such filling head 1 is shown. As can be seen the arcuate end wall 5 has a certain height functioning as a pool for the water flow. In accordance therewith also said liquid guide with outlet 7, designed as a smooth projection 50 extending from the end wall 5, has such height, furthermore comprising two side outlets 71, 72. As can be seen in FIGURE 4 said outlets 7, 71, 72 are each formed as a slot (i.e. as and elongated opening/hole) positioned at a well determined height above the bottom 3 in order to create more effective vortices R for the products which are floating and dragged by the flow also at a certain height. Generally such wall 5 has a height up to 40 cm and the flow in the filling head 1 has a height up to 20 cm. The positions of the outlets 7, 71, 72 are arranged accordingly. From the drawing it follows that the outlet slots (e.g. elongated outlets) 7, 71, 72 may e.g. extend in directions that are normally with respect to the bottom plate 3.

As shown in FIGURE 4 the filling head 1 is arranged in a frame 100. Such frame is part of a bin tank tower which is well known in this field of technology. Generally such filling head is lifted to a certain height for positioning on top of a bin (as usual having measures of about 1.1 m by 1.1 m by 0.8 m) and then lowering both, such that the filling head 1 is arranged and leveled to said channel 2 and said bin is arranged underneath in a tank. After such positioning the above mentioned flows are set and controlled for filling the bin. After filling, in reverse order the filling head 1 and the bin are moved, wherein the liquid is drained away from the bin, wherein the filled bin can be discharged, and wherein a next cycle can be carried out.

It has appeared that the above-mentioned regular flow can be obtained with less pumping power. Such flow has several advantages, amongst others, less damages of such vulnerable products, i.e. less mutual collisions and less bumping against the walls, and a more regular filling of such bin. The latter is can be seen mainly in the leveling of the products in such bin, i.e. no troughs anymore in bin corners or in the bin centre, giving a higher filling rate and thus a more economic processing.

In a further embodiment additional measures for avoiding product damage can be carried out. For example the projection 50 can be made of flexible material. Also the wall 5 can be adapted in such way, for example by covering the wall 5 with suitable material.

For those skilled in the art it might be clear that small deviations, modifications and additions to the above mentioned invention are considered to be comprised under the claims as attached. For example in the aperture rim air jets can be arranged resulting in less density liquid flows. Such flows enhance the aperture product drain virtually giving the product more weight, making it easier to drop the products down in the bin as positioned underneath. In a further design a more wide stream supply having accordingly more projections 5 can be applied, whereas the optimum number of slots should be comprised. In yet a further embodiment tuning all flow speeds is carried out suitably.

## Claims

1. Apparatus for filling bins with products, for example fruit, the apparatus comprising:
- a channel (2) for feeding a liquid stream with products into a flowing direction T to a filling head (1),
wherein said filling head (1) is connected to the downstream end of said channel (2), said filling head (1) being a part of a bin tank tower configured for mainly downwardly and upwardly moving said bins, and for positioning such bins for filling underneath said head in subsequent cycles,
wherein said filling head (1) has a bottom plate (3) with a mainly circular aperture (4) for guiding the stream of products from said channel (2), through said aperture, into a bin underneath during operation, and
wherein said filling head (1) has an arcuate end wall (5) for guiding the stream of products into said aperture,
- said bin tank tower comprises a lift for at least taking and moving such bin,
- a first control unit for controlling flow speed to said filling head and through said aperture, and
- a second control unit for controlling taking and moving such bin thereby moving such bin to a filling position before filling, and from the filling position after having been filled up,
**characterized in that,**
the apparatus comprises at least one additional liquid guide (6) having an outlet (7) in said arcuate end wall (5) for creating a liquid flow (L) mainly in an outlet direction reverse to said flowing direction (T).

2. The apparatus in accordance with claim 1, **characterized in that,**
the arcuate end wall (5) comprises a smooth projection (5) mainly extending into said outlet direction reverse to said flowing direction (T).

3. The apparatus in accordance with claim 2, **characterized in that**,
at least said projection (50) is made of flexible material.

4. The apparatus according to any of the preceding claims, wherein the liquid guide (6) is configured to direct the respective liquid flow (L) towards the mainly circular aperture (4).

5. The apparatus according to any of the preceding claims, wherein the outlet (7) of the liquid guide (6) is located opposite a centre of the mainly circular aperture (4), when viewed in a plan view.

6. The apparatus according to any of the preceding claims, wherein the outlet (7) of the liquid guide (6) is located centrally with respect to the product feeding channel (2), when viewed in a plan view.

7. The apparatus according to any of the preceding claims, wherein the additional liquid guide (6) comprises two side outlets (71, 72), in addition to the outlet (7) that is configured for creating a liquid flow (L) mainly in the outlet direction reverse to said flowing direction (T).

8. The apparatus according to claim 7, wherein said outlets (7, 71, 72) are formed as slots.

9. The apparatus according to any of the preceding claims, wherein the arcuate end wall (5) has a height up to 40 cm.

10. The apparatus according to any of the preceding claims, wherein during use the flow in the filling head (1) has a height up to 20 cm.

11. The apparatus according to any of the preceding claims, wherein in the aperture (4) rim air jets are arranged.

## Patentansprüche

1. Vorrichtung zum Befüllen von Behältern mit Produkten, beispielsweise Obst, umfassend:
- einen Kanal (2) zum Zuführen eines Flüssigkeitsstroms mit Produkten in einer Fließrichtung T zu einem Füllkopf (1),
wobei der Füllkopf (1) mit dem stromabwärts angeordneten Ende des Kanals (2) verbunden ist, der Füllkopf (1) Teil eines Behältertankturms ist, der konfiguriert ist, um die Behälter vorwiegend abwärts und aufwärts zu bewegen und um die Behälter in aufeinanderfolgenden Zyklen zum Befüllen unter dem Kopf zu positionieren,
wobei der Füllkopf (1) eine Bodenplatte (3) mit einer im Wesentlichen kreisförmigen Öffnung (4) aufweist, um den Produktstrom während des Betriebs von dem Kanal (2) durch die Öffnung in einen Behälter darunter zu leiten, und
wobei der Füllkopf (1) eine gebogene Abschlusswand (5) aufweist, um den Produktstrom in die Öffnung zu leiten,
- der Behältertankturm eine Hebevorrichtung umfasst, um mindestens einen solchen Behälter zu erfassen und zu bewegen,
- eine erste Steuervorrichtung zum Steuern der Fließgeschwindigkeit zu dem Füllkopf und durch die Öffnung, und
- eine zweite Steuereinheit, um das Erfassen und Bewegen des Behälters zu steuern und dadurch den Behälter vor dem Befüllen in eine Füllposition und nach dem Befüllen aus der Füllposition aufwärts zu bewegen,
**dadurch gekennzeichnet, dass**
die Vorrichtung mindestens eine zusätzliche Flüssigkeitsführung (6) mit einem Auslass (7) in der gebogenen Abschlusswand (5) umfasst, um vorwiegend in einer Auslassrichtung einen Flüssigkeitsfluss (L) zu erzeugen, der umgekehrt zu der Fließrichtung (T) verläuft.

2. Vorrichtung nach Anspruch 1, **dadurch gekennzeichnet, dass** die gebogene Abschlusswand (5) einen glatten Vorsprung (50) aufweist, der im Wesentlichen in der Auslassrichtung umgekehrt zu der Fließrichtung (T) verläuft.

3. Vorrichtung nach Anspruch 2, **dadurch gekennzeichnet, dass** mindestens der Vorsprung (50) aus flexiblem Material hergestellt ist.

4. Vorrichtung nach einem der vorhergehenden Ansprüche, wobei die Flüssigkeitsführung (6) konfiguriert ist, um den jeweiligen Flüssigkeitsfluss (L) zu der im Wesentlichen kreisförmigen Öffnung (4) zu leiten.

5. Vorrichtung nach einem der vorhergehenden Ansprüche, wobei der Auslass (7) der Flüssigkeitsführung (6), betrachtet aus einer Draufsicht, gegenüber einem Zentrum der im Wesentlichen kreisförmigen Öffnung (4) angeordnet ist.

6. Vorrichtung nach einem der vorhergehenden Ansprüche, wobei der Auslass (7) der Flüssigkeitsführung (6), betrachtet aus einer Draufsicht, zentral in Bezug auf den Produktzufuhrkanal (2) angeordnet ist.

7. Vorrichtung nach einem der vorhergehenden Ansprüche, wobei die zusätzliche Flüssigkeitsführung (6) zusätzlich zu dem Auslass (7), der konfiguriert ist, um einen Flüssigkeitsfluss (L) im Wesentlichen in der Auslassrichtung umgekehrt zu der Fließrichtung (T) zu erzeugen, zwei seitliche Auslässe (71, 72) umfasst.

8. Vorrichtung nach Anspruch 7, wobei die Auslässe (7, 71, 72) eine Schlitzform aufweisen.

9. Vorrichtung nach einem der vorhergehenden Ansprüche, wobei die gebogene Abschlusswand (5) eine Höhe bis zu 40 cm aufweist.

10. Vorrichtung nach einem der vorhergehenden Ansprüche, wobei während der Verwendung der Fluss in dem Füllkopf (1) eine Höhe bis zu 20 cm aufweist.

11. Vorrichtung nach einem der vorhergehenden Ansprüche, wobei in der Öffnung (4) Randluftdüsen angeordnet sind.

## Revendications

1. Appareil destiné à remplir des caisses avec des produits, par exemple des fruits, l'appareil comprenant :
- un canal (2) pour approvisionner un courant de liquide en produits dans une direction d'écoulement T vers une tête de remplissage (1) ;
dans lequel ladite tête de remplissage (1) est raccordée à l'extrémité aval dudit canal (2), ladite tête de remplissage (1) faisant partie d'une tour de stockage de caisses configurée pour déplacer lesdites caisses principalement vers le bas et vers le haut, et positionner les caisses pour les remplir sous ladite tête en cycles successifs ;
dans lequel ladite tête de remplissage (1) présente une plaque inférieure (3) avec une ouverture principalement circulaire (4) destinée à guider le flux de produits à partir dudit canal (2), à travers ladite ouverture, dans une caisse située en dessous en cours de fonctionnement ; et
dans lequel ladite tête de remplissage (1) présente une paroi d'extrémité arquée (5) destinée à guider le flux de produits dans ladite ouverture ;
- ladite tour de stockage de caisses comprend un dispositif élévateur destiné au moins à prendre et à déplacer une caisse ;
- une première unité de commande destinée à commander la vitesse d'écoulement vers ladite tête de remplissage et à travers ladite ouverture ; et
- une seconde unité de commande destinée à commander la prise et le déplacement d'une caisse, déplaçant ainsi la caisse vers une position de remplissage avant son remplissage, et à partir de la position de remplissage une fois que celle-ci a été remplie;
**caractérisé en ce que** :
l'appareil comprend au moins un guide de liquide supplémentaire (6) présentant un orifice de sortie (7) dans ladite paroi d'extrémité arquée (5) destiné à créer un flux de liquide (L) principalement dans une direction de sortie inverse de ladite direction d'écoulement (T).

2. Appareil selon la revendication 1, **caractérisé en ce que** :
la paroi d'extrémité arquée (5) comprend une saillie douce (5) s'étendant principalement dans ladite direction de sortie inverse de ladite direction d'écoulement (T).

3. Appareil selon la revendication 2, **caractérisé en ce que** :
ladite saillie au moins (50) est réalisée dans un matériau souple.

4. Appareil selon l'une quelconque des revendications précédentes, dans lequel le guide de liquide (6) est configuré pour diriger le flux de liquide respectif (L) vers l'ouverture principalement circulaire (4).

5. Appareil selon l'une quelconque des revendications précédentes, dans lequel l'orifice de sortie (7) du guide de liquide (6) se situe à l'opposé d'un centre de l'ouverture principalement circulaire (4), quand on regarde dans une vue en plan.

6. Appareil selon l'une quelconque des revendications précédentes, dans lequel l'orifice de sortie (7) du guide de liquide (6) se situe de manière centrale par rapport au canal d'approvisionnement en produits (2), quand on regarde dans une vue en plan.

7. Appareil selon l'une quelconque des revendications précédentes, dans lequel le guide de liquide supplémentaire (6) comprend deux orifices de sortie latéraux (71, 72), en plus de l'orifice de sortie (7) qui est configuré pour créer un flux de liquide (L) principalement dans la direction de sortie inverse de ladite direction d'écoulement (T).

8. Appareil selon la revendication 7, dans lequel lesdits orifices de sortie (7, 71, 72) sont formés comme des fentes.

9. Appareil selon l'une quelconque des revendications précédentes, dans lequel la paroi d'extrémité arquée (5) présente une hauteur pouvant atteindre 40 cm.

10. Appareil selon l'une quelconque des revendications précédentes, dans lequel, en service, le flux dans la tête de remplissage (1) présente une hauteur pouvant atteindre 20 cm.

11. Appareil selon l'une quelconque des revendications précédentes, dans lequel des gicleurs d'air de bord sont agencés dans l'ouverture (4).
